# EUROPÄISCHE PATENTSCHRIFT

(11) **EP 4 126 402 B1**
(45) Veröffentlichungstag und Bekanntmachung des Hinweises auf die Patenterteilung: **01.01.2025**
(21) Anmeldenummer: 21717337.6
(22) Anmeldetag: 30.03.2021
(51) Int. Cl.: B08B 7/00, B64C 21/10

(54) **VERFAHREN ZUR ENTFERNUNG VON ÜBERZÜGEN VON OBERFLÄCHEN**
METHOD FOR REMOVING COATINGS FROM SURFACES
PROCÉDÉ D'ÉLIMINATION DE REVÊTEMENT À PARTIR DE SURFACES

(30) Priorität: 30.03.2020 DE 102020108713
(43) Veröffentlichungstag der Anmeldung: 08.02.2023
(73) Patentinhaber: Lufthansa Technik AG, 22335 Hamburg (DE)
(72) Erfinder: OESER, Oliver, 25494 Borstel-Hohenraden (DE); MÜLLER, Jens-Uwe, 22359 Hamburg (DE); BONELLI, Claudia, 22763 Hamburg (DE)
(74) Vertreter: Glawe, Delfs, Moll
(86) Internationale Anmeldenummer: PCT/EP2021/058243
(87) Internationale Veröffentlichungsnummer: WO 2021/198225

(56) Entgegenhaltungen:
- WO-A1-2012/058729
- DE-A1- 102015 204 254
- US-A1- 2014 272 237

## Beschreibung

Die Erfindung betrifft ein Verfahren zur Entfernung von Überzügen von Oberflächen, insbesondere von durch Umwelteinflüsse versprödeten Überzügen von Oberflächen.

Das Anbringen von Überzügen, bspw. in Form von selbstklebenden Folien, auf Oberflächen wie bspw. der Außenhaut von Flugzeugen ist im Stand der Technik für verschiedene Anwendungszwecke bekannt. Neben dem Anbringen von Logos, Schriftzügen oder sonstigen grafischen Elementen durch entsprechend ausgestaltete Folien, kommen vermehrt auch aerodynamisch funktionale Folien zum Einsatz.

Aerodynamisch funktionalen Folien sind in unterschiedlichen Ausprägungen und Anwendungsbereichen aus dem Stand der Technik bekannt, und dienen regelmäßig dazu, die Wandschubspannung auf Oberflächen von umströmten Körpern zu reduzieren. Die aerodynamisch funktionalen Folien weisen dazu in der Regel eine mikrostrukturierte Oberfläche auf. Eine verbreitete Mikrostruktur ist dabei die sog. Riblet-Struktur, mit sehr kleinen, im Wesentlichen entlang der Hauptströmungsrichtung verlaufenden Rippen. Werden entsprechende Riblet-Strukturen auf die Außenhaut eines Flugzeugs aufgebracht, kann dadurch der Strömungswiderstand des Flugzeugs und so der Treibstoffverbrauch reduziert werden.

Für die Anbringung an der Außenhaut eines Flugzeuges vorgesehenen Folien sind aus Gewichtsgründen regelmäßig dünn ausgeführt. Gleichzeitig sind sie erheblichen Umwelteinflüssen ausgesetzt. Neben der Überströmung mit Luft, in der Partikel, wie Sand oder Eis, mitgeführt werden und die Folie oder deren aerodynamisch funktionaler Oberfläche mechanisch beschädigen können, ist die Folie insbesondere bei Verkehrsflugzeugen in Reiseflughöhe regelmäßig intensiver Sonnenbestrahlung ausgesetzt.

Aufgrund der in der Praxis auftretenden Beschädigungen sind insbesondere aerodynamisch funktionale Folien regelmäßig zu ersetzen. Es hat sich aber gezeigt, dass aufgrund der geringen Dicke sowie des aufgrund der intensiven Bestrahlung mit Sonnenlicht im Betrieb eines Flugzeugs spröde Werdens das Entfernen von auf die Außenhaut eines Flugzeugs aufgebrachter Folie häufig schwierig ist. Das vollständige und rückstandslose Entfernen, ohne dass dabei die Außenhaut beschädigt wird, ist derzeit nur mit manuell durchzuführenden chemischen oder mechanischen Verfahren möglich, die sehr zeitaufwendig sind. Auch können bei entsprechenden Verfahren gesundheits- oder umweltgefährdende Stäube und/oder Chemikalienreste entstehen.

Vergleichbares gilt auch für solche Überzüge, bei denen Lack auf die Oberfläche aufgebracht und in die bspw. eine gewünschte Mikrostruktur eingeprägt ist. Auch diese können verspröden und müssen für eine evtl. Erneuerung erst mühsam entfernt werden.

Neben der beschriebenen Anwendung auf der Außenhaut von Flugzeugen kommen entsprechende Überzüge auch auf anderen Oberflächen zum Einsatz, bspw. an den Rotorblättern von Windenergieanlagen oder an Hochgeschwindigkeitszügen, wo sie jedoch vergleichbaren Umwelteinflüssen ausgesetzt sind und nach Beschädigung ebenfalls entfernt werden müssen, bevor sie erneuter werden können.

Das Dokument WO 2012/058729 beschreibt ein Verfahren zum Entfernen von unerwünschten Graffitis, bei dem ein zu schützendes Substrat mit einer transparenten Opferschicht versehen ist, auf der ein mögliches Graffiti aufgetragen wird. Durch Anbringen einer Klebeschicht, deren Adhäsion an der Opferschicht größer ist als diejenige der Opferschicht am Substrat, und anschließendes Abziehen der Klebeschicht kann die Opferschicht zusammen mit den darauf befindlichen Graffiti entfernt werden. Das Dokument DE 10 2015 204 254 A1 beschreibt ein Verfahren zum Entfernen von Tinte, Farbe und/oder Lacke von Oberflächen, bei dem die Haftung der Tinte mit einem Reinigungsmittel gemindert wird, bevor anschließend ein Klebestreifen darauf angepresst und unmittelbar wieder abgezogen wird. Die Tinte soll dann aufgrund der bereits reduzierten Haftung auf der Oberfläche an dem Klebestreifen anhaften und so entfernt werden können.

In Dokument US 2014/0272237 A1 ist eine Riblet-Folie offenbart, die für organisches Reinigungsmittel derart durchlässig sein soll, dass durch den oberflächlichen Auftrag von entsprechendem Reinigungsmittel die Klebeverbindung mit der darunterliegenden Oberfläche gelöst werden kann.

Aufgabe der vorliegenden Erfindung ist es daher, ein gegenüber dem Stand der Technik verbessertes Verfahren zur Entfernung von Überzügen, insbesondere von durch Umwelteinflüsse versprödete Überzügen, von Oberflächen zu schaffen.

Gelöst wird diese Aufgabe durch ein Verfahren gemäß dem Hauptanspruch 1, bzw. 3. Weiterbildungen sind Gegenstand der abhängigen Ansprüche.

Demnach betrifft die Erfindung gemäß Anspruch 1 ein Verfahren zur Entfernung von Überzügen von Oberflächen, umfassend die Schritte:
- großflächiges Aufbringen eines geeignet gewählten Abziehmittels auf den abzulösenden Überzug zur Herstellung einer stoffschlüssigen Verbindung, sodass die Verbindung zwischen Abziehmittel und abzulösendem Überzug stärker ist als die Verbindung zwischen abzulösendem Überzug und der Oberfläche, wobei das Abziehmittel eine wenigstens einseitig selbstklebende, flächige Abziehmasse ist, die Abziehmasse in Anpressrichtung verformbar ist und die zum Aufbringen mit einer selbstklebenden Seite auf den abzulösenden Überzug gedrückt wird, und wobei der abzuziehende Überzug eine mikrostrukturierte Oberfläche aufweist; und
- Abziehen des Abziehmittels mitsamt dem daran anhaftenden abzulösenden Überzug.

Des Weiteren betrifft die Erfindung gemäß Anspruch 3 ein Verfahren zur Entfernung von Überzügen von Oberflächen, umfassend die Schritte:
- großflächiges Aufbringen eines geeignet gewählten Abziehmittels auf dem abzulösenden Überzug zur Herstellung einer stoffschlüssigen Verbindung, sodass die Verbindung zwischen Abziehmittel und abzulösendem Überzug stärker ist als die Verbindung zwischen abzulösendem Überzug und der Oberfläche, wobei das Abziehmittel eine aushärtbare Substanz ist, welche sich beim Aushärten mit dem abzulösenden Überzug verbindet und welche im Ausgangszustand flüssig ist, wobei der abzuziehende Überzug eine mikrostrukturierte Oberfläche aufweist; und
- Abziehen des Abziehmittels mitsamt dem daran anhaftenden abzulösenden Überzug.

Zunächst werden einige im Rahmen der Erfindung verwendete Begriffe erläutert.

Eine erste Verbindung ist "stärker" als eine zweite Verbindung, wenn die erste Verbindung einer Belastung, bei der die zweite Verbindung versagt, standhält. Im Fall von Klebeverbindungen ist bspw. die Haftkraft der ersten Verbindung F_{H1}, die überwunden werden muss, um die erste Verbindung zu lösen, größer als die Haftkraft der zweiten Verbindung F_{H2} (F_{H1} > F_{H2}).

Umgekehrt gilt eine erste Verbindung als "schwächer" als eine zweite Verbindung, wenn die erste Verbindung bei identischer Belastung nachgibt, während die zweite Verbindung noch Bestand hat. Im Fall von Klebeverbindungen ist die Haftkraft der ersten Verbindung F_{H1} kleiner als die Haftkraft der zweiten Verbindung F_{H2} (F_{H1} < F_{H2}).

Die Erfindung hat erkannt, dass sich ein auf einer Oberfläche angebrachter Überzug, der sich nicht ohne Weiteres unmittelbar abziehen lässt, insbesondere weil er aufgrund von Umwelteinflüssen spröde geworden bzw. "versprödet" ist, entfernen lässt, wenn zunächst ein Abziehmittel aufgebracht wird, welches sich derart stark mit dem abzulösenden Überzug verbindet, dass bei einem anschließenden Abziehen des Abziehmittels der Überzug an dem Ablösemittel anhaftet und somit zusammen mit dem Abziehmittel abgezogen wird. Die für das Abziehen erforderliche Zugfestigkeit kann dabei allein durch das Abziehmittel hergestellt werden, sodass es auf die Zugfestigkeit des abzuziehenden Überzugs und/oder dessen Versprödungsgrad nicht mehr ankommt.

Damit der abzulösende Überzug beim Abziehen des Abziehmittels auch tatsächlich an dem Abziehmittel anhaftet und folglich von der Oberfläche entfernt wird, ist es erforderlich, dass die Verbindung zwischen Abziehmittel und abzulösendem Überzug stärker ist, als die Verbindung zwischen abzulösendem Überzug und der Oberfläche. Die Wahl eines geeigneten Abziehmittels ist bei Vorliegen ausreichender Informationen zur Verbindung des abzuziehenden Überzugs mit der Oberfläche, bspw. zu dem verwendeten Klebstoff, problemlos möglich, lässt sich aber auch durch einfache Versuche unmittelbar an dem abzulösenden Überzug ermitteln.

Bei dem Abziehmittel handelt es sich gemäß einem Aspekt der Erfindung um eine wenigstens einseitig selbstklebende, flächige Abziehmasse, die zum Aufbringen mit einer selbstklebenden Seite auf den abzulösenden Überzug gedrückt wird. Durch das Andrücken wird die gewünschte und für das weitere Verfahren erforderliche stoffschlüssige Verbindung zwischen Abziehmasse und abzulösendem Überzug hergestellt.

Grundsätzlich kann es sich bei der Abziehmasse um eine selbstklebende Abziehfolie handeln. Um jedoch eine flächige Verbindung zwischen der Abziehmasse und dem abzulösenden Überzug auch bei Beschädigungen und/oder Mikrostrukturierungen der Oberfläche des abzulösenden Überzugs herstellen zu können, ist die Abziehmasse in Anpressrichtung verformbar. Wird die Abziehmasse dann an den abzuziehenden Überzug angedrückt, kann sie sich an diese anschmiegen und vollflächig mit dieser verbinden, unabhängig davon, ob eine Beschädigung und/oder Mikrostrukturierung der Oberfläche des abzuziehenden Überzugs vorliegt. Die Abziehmasse kann dabei plastisch und/oder elastisch verformbar sein.

Insbesondere bei verformbaren Abziehmassen kann die Zugfestigkeit der Abziehmasse evtl. nicht ausreichend sein, um die Abziehmasse zusammen mit daran anhaftendem Überzug von der Oberfläche problemlos abziehen zu können. Es ist insbesondere in diesen Fällen bevorzugt, wenn die Abziehmasse auf der von dem abzulösenden Überzug entfernten Seite eine zugfeste Abziehschicht, vorzugsweise eine Abziehfolie, aufweist. Mit einer entsprechenden Abziehschicht kann die Zugfestigkeit der Abziehmasse erhöht werden, um das erfindungsgemäß vorgesehene Abziehen des Abziehmittels mitsamt dem daran anhaftenden abzulösenden Überzug zu ermöglichen.

Alternativ zur Verwendung einer Abziehmasse als Abziehmittel ist gemäß einem weiteren Aspekt der Erfindung eine aushärtbare Substanz als Abziehmittel vorgesehen sein, welche sich beim Aushärten mit dem abzulösenden Überzug stoffschlüssig verbindet. Nach dem Aushärten bildet die Substanz ein zum Abziehen mitsamt dem daran anhaftenden abzulösenden Überzug geeignetes Abziehmittel.

Die aushärtbare Substanz ist dabei im Ausgangszustand flüssig. Ein großflächiges Aufbringen der Substanz auf einen abzulösenden Überzug ist damit einfach möglich. Nach dem Aushärten ist die Substanz fest.

In die noch nicht-ausgehärtete Substanz kann auch ein Netz oder ein Textil großflächig eingebracht werden, welches von der noch nicht-ausgehärteten Substanz vollständig umschlossen wird. Nach dem Aushärten der Substanz kann das Netz bzw. das Textil die Zugfestigkeit des Abziehmittels erhöhen.

Unabhängig, wie das Abziehmittel gebildet ist, ist es bevorzugt, wenn es derart gewählt ist, dass eine evtl. Verbindung zwischen Abziehmittel und der Oberfläche schwächer ist als die Verbindung zwischen Abziehmittel und abzulösendem Überzug. Weiter ist bevorzugt, wenn eine evtl. Verbindung zwischen Abziehmittel und der Oberfläche auch schwächer ist als die Verbindung zwischen abzulösendem Überzug und der Oberfläche. Dadurch wird erreicht, dass auch bei planvollen Auslassungen in dem abzuziehenden Überzug oder erheblichen Beschädigungen des abzulösenden Überzugs, in deren Bereich das Abziehmittel beim Andrücken in unmittelbaren Kontakt mit der Oberfläche kommt, das Abziehen des Abziehmittels problemlos und insbesondere auch beschädigungsfrei für die Oberfläche möglich ist.

Die erfindungsgemäßen Verfahren haben sich als besonders gut geeignet für das Abziehen von Überzügen mit mikrostrukturierter Oberfläche erwiesen. Dies gilt insbesondere, wenn der Überzug eine Riblet-Struktur aufweist - also eine Riblet-förmige Oberflächenstrukturierung. Da es bei den erfindungsgemäßen Verfahren zum Ablösen des Überzugs nicht auf die Zugfestigkeit des

Überzugs selbst ankommt, kann der abzulösende Überzug besonders dünn und somit leicht ausgestaltet werden und insbesondere ohne im Stand der Technik häufig ansonsten vorgesehen, zugfeste Zusatzschichten auskommen.

Der abzuziehende Überzug kann eine auf die Oberfläche aufgeklebte Folie oder eine auf die Oberfläche aufgetragene Lackschicht sein, jeweils ggf. mit darin eingeprägter mikrostrukturierter Oberfläche. Bei der Oberfläche kann es sich insbesondere die Außenhaut eines Flugzeugs, eines Hochgeschwindigkeitszuges oder eines Windenergieanlagenrotorblatts handeln.

Die Erfindung wird nun anhand bevorzugter Ausführungsformen unter Bezugnahme auf die beigefügten Zeichnungen beispielhaft beschrieben. Es zeigen:
- Figur 1a-d:: eine schematische Darstellung eines ersten Ausführungsbeispiels eines erfindungsgemäßen Verfahrens;
- Figur 2a-d:: eine schematische Darstellung eines zweiten Ausführungsbeispiels eines erfindungsgemäßen Verfahrens; und
- Figur 3a-c:: eine schematische Darstellung eines dritten Ausführungsbeispiels eines erfindungsgemäßen Verfahrens.

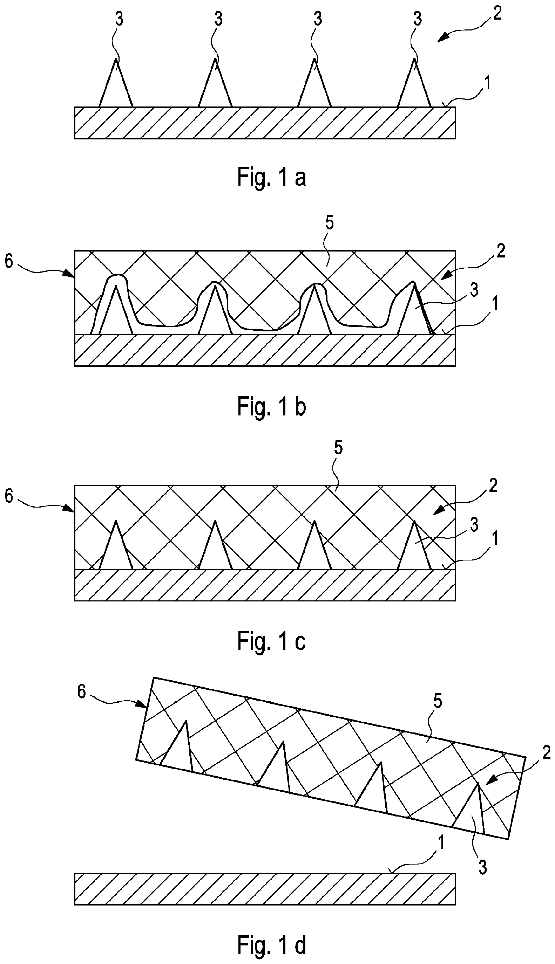

In Figur 1a ist zur Illustration des ersten Ausführungsbeispiels eines erfindungsgemäßen Verfahrens ein Abschnitt der Außenhaut eines Verkehrsflugzeuges als Oberfläche 1 dargestellt, auf der mithilfe einer Transferfolie (nicht dargestellt) einzelne Riblets 3, die, wenn auch nicht untereinander unmittelbar verbunden, zusammen einen abzulösenden folienartigen Überzug 2 im Sinne der vorliegenden Erfindung bilden.

Zum Ablösen des Überzugs 2 wird zunächst eine Abziehmasse 5 als Abziehmittel 6 auf den Überzug 2 aufgebracht (Figur 1b) und anschließend an den Überzug 2 bzw. die Oberfläche 1 angedrückt. Da die Abziehmasse 5 verformbar und auf der, der Oberfläche 1 zugewandten Seite selbstklebend ist, wird so eine groß- bzw. vollflächige stoffschlüssige Verbindung zwischen Abziehmasse 5 und Überzug 2 erreicht (Figur 1c). Dabei ist die selbstklebende Eigenschaft der Abziehmasse 5 so gewählt, dass die stoffschlüssige Verbindung zwischen Abziehmasse 5 und Überzug 2 stärker ist, als die Verbindung zwischen Überzug 2 und Oberfläche 1. Gleichzeitig soll die stoffschlüssige Verbindung zwischen Abziehmasse 5 und Oberfläche 1 in den Bereichen des Überzugs 2 zwischen den einzelnen Riblets 3 ausreichend gering sein, um den die äußerste Schicht der Oberfläche 1 regelmäßig bildenden Lack im nachfolgenden nicht zu beschädigen.

Ist die Abziehmasse 5 vollständig aufgebracht und angedrückt, kann die Abziehmasse 5 als Abziehmittel 6 von der Oberfläche 1 abgezogen werden, wobei aufgrund der vorstehend beschriebenen Verhältnisse der einzelnen Verbindungen zwischen Oberfläche 1, Überzug 2 und Abziehmasse 5 der Überzug 2 an dem Abziehmittel 6 anhaftet und so von der Oberfläche 1 entfernt wird (Figur 1d).

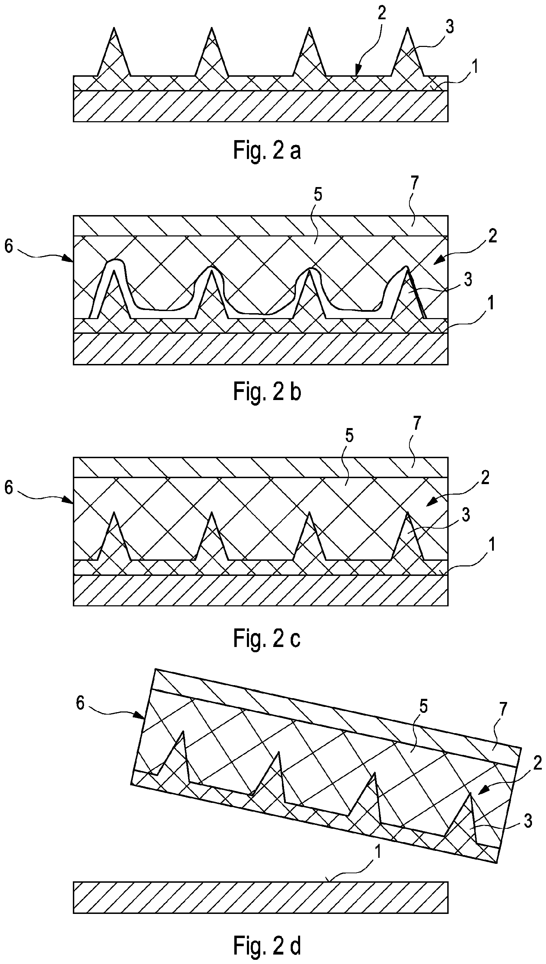

In Figur 2 ist ein zweites Ausführungsbeispiel des erfindungsgemäßen Verfahrens dargestellt. Auf der Oberfläche 1 - bspw. der Außenhaut eines Flugzeugs - ist eine grundsätzlich durchgehende Folie mit mikrostrukturierter Oberfläche umfassend Riblets 3 als Überzug 2 angeordnet, die entfernt werden soll (Figur 2a).

Zum Ablösen des Überzugs 2 wird - vergleichbar zum Ausführungsbeispiel gemäß Figur 1 - zunächst eine Abziehmasse 5 als Abziehmittel 6 mit ihrer selbstklebenden Seite auf den Überzug 2 aufgebracht (Figur 2b) und anschließend an den Überzug 2 bzw. die Oberfläche 1 angedrückt, sodass sich eine stoffschlüssige Verbindung zwischen Abziehmittel 6 und Überzug 2 ergibt (Figur 2c). Die Eigenschaften der Verbindung im Verhältnis zur Verbindung zwischen Überzug 2 und Oberfläche 1 entsprechen dabei dem vorhergehenden Ausführungsbeispiel, weshalb auf die entsprechenden Ausführungen verwiesen wird.

Auf der der Oberfläche 1 abgewandten Seite weist das Abziehmittel 6 ein unlösbar mit der Abziehmasse 5 verbundene bzw. integral damit ausgeführte Abziehfolie 7 auf, welche die Zugfestigkeit des Abziehmittels 6 erhöht, um so das in Figur 2d skizzierte Abziehen des Abziehmittels 6 mitsamt dem daran anhaftenden Überzug 2 zu erleichtern.

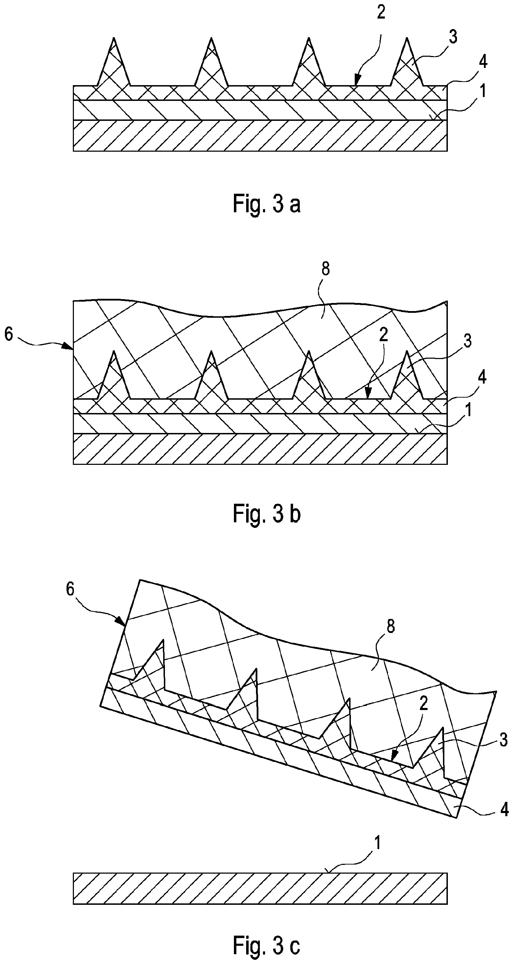

Figur 3 illustriert ein drittes Ausführungsbeispiel eines erfindungsgemäßen Verfahrens.

Der in diesem Beispiel Überzug 2 mit Riblets 3 ist mithilfe einer Trägerfolie 4 an der Oberfläche 1 - der Außenhaut eines Flugzeugs - befestigt, wobei die Verbindung zwischen Überzug 2 und Trägerfolie 4 stärker ist als die Verbindung zwischen Trägerfolie 4 und Oberfläche 1.

Als Abziehmittel 6 wird in diesem Ausführungsbeispiel eine aushärtende gelartige Substanz 8 auf den Überzug 2 aufgebracht, die sich beim Aushärten mit der abzulösenden Folie 2 stoffschlüssig verbindet (Figur 3b). Die so entstehende stoffschlüssige Verbindung zwischen Abziehmittel 6 und Überzug 2 ist stärker als die Verbindung zwischen Überzug 2 und Oberfläche 1, sodass der Überzug 2 beim Abziehen des Abziehmittels 6 nach vollständigem Aushärten der Substanz 8 an diesem anhaftet und so mitsamt der Trägerfolie 4 von der Oberfläche 1 entfernt wird (Figur 3c).

## Patentansprüche

1. Verfahren zur Entfernung von Überzügen (2) von Oberflächen (1), umfassend die Schritte:
- großflächiges Aufbringen eines geeignet gewählten Abziehmittels (6) auf dem abzulösenden Überzug (2) zur Herstellung einer stoffschlüssigen Verbindung, sodass die Verbindung zwischen Abziehmittel (5) und abzulösendem Überzug (2) stärker ist als die Verbindung zwischen abzulösendem Überzug (2) und der Oberfläche (1), wobei das Abziehmittel (6) eine wenigstens einseitig selbstklebende, flächige Abziehmasse (5) ist, die Abziehmasse (5) in Anpressrichtung verformbar ist und die zum Aufbringen mit einer selbstklebenden Seite auf den abzulösenden Überzug (2) gedrückt wird, und wobei der abzuziehende Überzug (2) eine mikrostrukturierte Oberfläche aufweist; und
- Abziehen des Abziehmittels (6) mitsamt dem daran anhaftenden abzulösenden Überzug (2).

2. Verfahren nach Anspruch 1,
**dadurch gekennzeichnet, dass**
die Abziehmasse (5) auf der von dem abzulösenden Überzug (2) entfernten Seite eine zugfeste Abziehschicht, vorzugsweise eine Abziehfolie (7), aufweist.

3. Verfahren zur Entfernung von Überzügen (2) von Oberflächen (1), umfassend die Schritte:
- großflächiges Aufbringen eines geeignet gewählten Abziehmittels (6) auf dem abzulösenden Überzug (2) zur Herstellung einer stoffschlüssigen Verbindung, sodass die Verbindung zwischen Abziehmittel (5) und abzulösendem Überzug (2) stärker ist als die Verbindung zwischen abzulösendem Überzug (2) und der Oberfläche (1), wobei das Abziehmittel (6) eine aushärtbare Substanz (8) ist, welche im Ausgangszustand flüssig ist und sich beim Aushärten mit dem abzulösenden Überzug (2) verbindet, und wobei der abzuziehende Überzug (2) eine mikrostrukturierte Oberfläche aufweist; und
- Abziehen des Abziehmittels (6) mitsamt dem daran anhaftenden abzulösenden Überzug (2).

4. Verfahren nach einem der vorhergehenden Ansprüche,
**dadurch gekennzeichnet, dass**
das Abziehmittel (6) derart gewählt ist, dass eine evtl. Verbindung zwischen Abziehmittel (6) und der Oberfläche (1) schwächer ist als die Verbindung zwischen Abziehmittel (6) und abzulösendem Überzug (2), vorzugsweise schwächer als die Verbindung zwischen abzulösendem Überzug (2) und der Oberfläche (1).

5. Verfahren nach einem der vorhergehenden Ansprüche,
**dadurch gekennzeichnet, dass**
der abzuziehende Überzug (2) eine Riblet-Struktur (3) umfasst.

6. Verfahren nach einem der vorhergehenden Ansprüche,
**dadurch gekennzeichnet, dass**
der abzuziehende Überzug (2) eine auf die Oberfläche (1) aufgeklebte Folie oder eine auf die Oberfläche (1) aufgetragene Lackschicht ist.

7. Verfahren nach einem der vorhergehenden Ansprüche,
**dadurch gekennzeichnet, dass**
die Oberfläche (1) die Außenhaut eines Flugzeugs, eines Hochgeschwindigkeitszuges oder eines Windenergieanlagenrotorblatts ist.

## Claims

1. Method for removing coatings (2) from surfaces (1), comprising the steps of:
- applying, over a large area, a suitably selected stripping agent (6) to the coating (2) to be detached for the purpose of producing a cohesive bond, such that the bond between stripping agent (5) and coating (2) to be detached is stronger than the bond between coating (2) to be detached and the surface (1), wherein the stripping agent (6) is an at least one-sidedly self-adhesive areal stripping compound (5), the stripping compound (5) is deformable in the pressing-on direction and, for being applied, is pressed with a self-adhesive side onto the coating (2) to be detached, and wherein the coating (2) to be stripped off has a micro-structured surface; and
- stripping off the stripping agent (6) together with the coating (2) to be detached adhering thereto.

2. Method according to Claim 1,
**characterized in that**
the stripping compound (5) has, on the side remote from the coating (2) to be detached, a tension-resistant stripping layer, preferably a stripping film (7).

3. Method for removing coatings (2) from surfaces (1), comprising the steps of:
- applying, over a large area, a suitably selected stripping agent (6) to the coating (2) to be detached for the purpose of producing a cohesive bond, such that the bond between stripping agent (5) and coating (2) to be detached is stronger than the bond between coating (2) to be detached and the surface (1), wherein the stripping agent (6) is a curable substance (8) which is liquid in its initial state and which, when curing, bonds with the coating (2) to be detached, and wherein the coating (2) to be stripped off has a micro-structured surface; and
- stripping off the stripping agent (6) together with the coating (2) to be detached adhering thereto.

4. Method according to one of the preceding claims,
**characterized in that**
the stripping agent (6) is selected in such a way that a possible bond between stripping agent (6) and the surface (1) is weaker than the bond between stripping agent (6) and coating (2) to be detached, preferably weaker than the bond between coating (2) to be detached and the surface (1).

5. Method according to one of the preceding claims,
**characterized in that**
the coating (2) to be stripped off comprises a riblet structure (3).

6. Method according to one of the preceding claims,
**characterized in that**
the coating (2) to be stripped off is a film adhesively bonded to the surface (1) or is a paint layer applied to the surface (1).

7. Method according to one of the preceding claims,
**characterized in that**
the surface (1) is the outer skin of an aircraft, of a high-speed train or of a wind-turbine rotor blade.

## Revendications

1. Procédé d'élimination de revêtements (2) de surfaces (1), comprenant les étapes suivantes :
- l'application sur une grande surface d'un moyen de retrait (6) choisi de manière appropriée sur le revêtement à détacher (2) pour réaliser une liaison par matière, de telle sorte que la liaison entre le moyen de retrait (5) et le revêtement à détacher (2) est plus forte que la liaison entre le revêtement à détacher (2) et la surface (1), le moyen de retrait (6) étant une masse de retrait (5) plane, autocollante au moins d'un côté, la masse de retrait (5) étant déformable dans la direction de pressage et étant pressée pour l'application avec un côté autocollant sur le revêtement à détacher (2), et le revêtement à retirer (2) présentant une surface microstructurée ; et
- le retrait du moyen de retrait (6) avec le revêtement à détacher (2) qui y adhère.

2. Procédé selon la revendication 1,
**caractérisé en ce que**
la masse de retrait (5) présente, sur le côté éloigné du revêtement à détacher (2), une couche de retrait résistante à la traction, de préférence une feuille de retrait (7).

3. Procédé d'élimination de revêtements (2) de surfaces (1), comprenant les étapes suivantes :
- l'application sur une grande surface d'un agent de retrait (6) choisi de manière appropriée sur le revêtement à détacher (2) pour réaliser une liaison par matière, de telle sorte que la liaison entre l'agent de retrait (5) et le revêtement à détacher (2) est plus forte que la liaison entre le revêtement à détacher (2) et la surface (1), le moyen de retrait (6) étant une substance durcissable (8) qui est liquide à l'état initial et qui se lie au revêtement à détacher (2) lors du durcissement, et le revêtement à retirer (2) présentant une surface microstructurée ; et
- le retrait du moyen de retrait (6) avec le revêtement à détacher (2) qui y adhère.

4. Procédé selon l'une quelconque des revendications précédentes,
**caractérisé en ce que**
le moyen de retrait (6) est choisi de telle sorte qu'une éventuelle liaison entre le moyen de retrait (6) et la surface (1) est plus faible que la liaison entre le moyen de retrait (6) et le revêtement à détacher (2), de préférence plus faible que la liaison entre le revêtement à détacher (2) et la surface (1).

5. Procédé selon l'une quelconque des revendications précédentes,
**caractérisé en ce que**
le revêtement à retirer (2) comprend une structure de riblet (3).

6. Procédé selon l'une quelconque des revendications précédentes,
**caractérisé en ce que**
le revêtement à retirer (2) est une feuille collée sur la surface (1) ou une couche de vernis appliquée sur la surface (1).

7. Procédé selon l'une quelconque des revendications précédentes,
**caractérisé en ce que**
la surface (1) est la peau extérieure d'un aéronef, d'un train à grande vitesse ou d'une pale de rotor d'éolienne.
